Europäisches Patentamt

European Patent Office

Office européen des brevets

(19)

(11) Publication number: **0 385 785**
**A1**

## (12) EUROPEAN PATENT APPLICATION

(21) Application number: **90302210.1**

(22) Date of filing: **01.03.90**

(51) Int. Cl.⁵: **C03C 27/12, H05B 3/26**

(30) Priority: **03.03.89 GB 8904903**

(43) Date of publication of application:
**05.09.90 Bulletin 90/36**

(84) Designated Contracting States:
**AT BE CH DE ES FR GB IT LI NL SE**

(71) Applicant: **PILKINGTON PLC**
**Prescot Road**
**St. Helens Merseyside WA10 3TT(GB)**

(72) Inventor: **Lyon, Michael**
**33 Westhaven Crescent**
**Aughton, Ormskirk, Lancashire(GB)**
Inventor: **Castle, Derek Charles**
**58 Hagley Road**
**Hayley Green, Halesowen, West**
**Midlands(GB)**

(74) Representative: **Jenkins, Peter David et al**
**PAGE, WHITE & FARRER 54 Doughty Street**
**London WC1N 2LS(GB)**

(54) **Production of heated windows.**

(57) A process for the production of a wire-heated laminated window comprises forming an array of fine, closely-spaced heating wires on the surface of a sheet of interlayer material, applying metal strips over the wires in position corresponding to opposite edges of the heated area of the laminated window to be produced, and heating the metal strips to adhere them to the interlayer material and at least temporarily secure the wire array in position on the interlayer material, sandwiching the interlayer material between two outer panes and autoclaving the resulting laminate.

Fig.1.

EP 0 385 785 A1

## PRODUCTION OF HEATED WINDOWS

The invention relates to a process for the production of heated windows, in particular windows which are electrically heated by an array of fine, closely spaced wires embedded in a plastics interlayer between two outer panes, usually of glass.

US patents 3 635 777 and 3 769 125 relate to an apparatus and method for embedding the wires in an interlayer material, such as polyvinylbutyral, by guiding a continuous wire along a predetermined path to and fro over the interlayer, locally heating the interlayer immediately in front of the wire and pressing the wire into the heated interlayer. The interlayer sheet incorporating the wire array is then sandwiched between a pair of shaped glass panes to produce a heatable window.

UK patent application 2 044 173A describes a modification of the above process in which helical coils of fine wire are formed around plastics filaments, an array of closely spaced filaments is dispersed over a preheated sheet of interlayer material and the array attached to the heated interlayer material using a roller to press the filaments into the hot surface of the interlayer material. Bus bars, at right angles to the heating elements, are formed by attaching thin tin plated copper bands to the interlayer material using a heated tool before the filaments are applied. The plastics filaments used may be of the same material as the interlayer, but preferably contain a smaller proportion of plasticiser to avoid breakage during formation of the filament array. When a laminate is subsequently made up, with the interlayer between curved panes of glass, and autoclaved, plasticiser diffuses out of the interlayer into the plastics filaments embedded therein so that a uniform refractive index is achieved throughout the interlayer material.

The method described in the US patents referred to above requires a cooplex and expensive apparatus, while the method described in UK patent specification 2 044 173A requires the pre-production of plastics filaments of the same base material as the interlayer having wire wound around them in a helical configuration. It would be desirable to have a simpler process which does not require the complex apparatus described above or the pre-production of a plastics filament wound with wire.

UK patent specification 972 453 describes a simpler process in which an array of fine, closely-spaced parallel wires is formed on the surface of a glass pane and adhered to the glass by spraying with a dilute solution of interlayer material in a volatile solvent. Bus bars are formed by laying thin, tinned, copper strips over the wires, and brushing over with some of the volatile solvent, which flows round and under the copper strips and disperses the interlayer material which would otherwise separate the copper strip from the wires. The glass pane carrying the array of wires and bus bars is then formed into a laminate in conventional manner with the interlayer sheet applied over the wires and bus bars. Unfortunately, when, as is usual, polyvinylbutyral is used in the interlayer material, the solvent (chloroform) required to disperse the interlayer material from around the wires and facilitate electrical contact with the bus bars is environmentally objectionable and its use necessitates a number of precautions which complicate the production process.

The difficulties referred to above are overcome by the present invention in which an array of fine closely spaced wires is formed on the surface of the interlayer material and temporarily secured in position by applying thin conductive metal strips over the wires and adhering the metal strips to the interlayer material by heating. The interlayer material is then used between two outer panes to form a laminate.

According to the present invention there is provided a process for the production of a wire-heated laminated window comprising forming an array of fine, closely-spaced heating wires on the surface of a sheet of interlayer material, applying metal strips over the wires in positions corresponding to opposite edges of the heated area of the laminated window to be produced, and heating the metal strips to adhere them to the interlayer material and at least temporarily secure the wire array in position on the interlayer material, sandwiching the interlayer material between two outer panes and autoclaving the resulting laminate.

Additional metal strips may be adhered to the interlayer material in positions corresponding to opposite edges of the heated area of the laminated window before the wire array is formed on the surface of the interlayer material, so that these additional metal strips lie under the wire array. It will usually be sufficient for the metal strips over the wire array to overlap such additional metal strips for adhesion to the interlayer along one longitudinal edge of each of the metal strips. However, the additional metal strips are preferably narrower than the metal strips applied over the heating wires, so that the said metal strips applied over the heating wires may extend beyond the additional metal strips along both edges thereof for adhesion to the interlayer material on either side of the additional metal strips.

To improve the electrical contact between the heating wires and the metal strips and/or additional metal strips, which serve as bus bars in use, either the metal strips and/or the additional metal strips may be provided with a surface layer of low melting solder on their surfaces facing the heating wires such that the solder melts to provide good electrical contact between the said metal strips and/or additional metal strips and the heating wires on subsequent autoclaving of the laminate.

When polyvinylbutyral is used as the interlayer material, the laminate will usually be heated in an autoclave at a temperature in the range 135°C to 150°C and a pressure of 8 to 15 bars for a period of 15 to 45 minutes. The solder used should be selected to melt under the conditions it encounters in the autoclave. It is preferred to use a fusible alloy solder which wets the metal strips. Unfortunately, since the heating wires are usually made of tungsten, which is difficult to wet, suitable fusible alloys which also wet the heating wires are not normally available. It is therefore preferred to use solders which contain about 50% or more by weight bismuth, since such solders generally expand on cooling so that they will grip the heating wires firmly in position.

The low melting solders may be used over higher melting solders (fusible alloys) which may be applied over the metal strips, especially if the strips are of copper, to protect them from atmospheric corrosion. In that case, it is possible that the two layers of solder may react together to produce other alloys. However, provided the resultant layer structures include sufficient alloy components, effective as solder, melting below the autoclaving temperature, such reaction will not usually be a problem. Examples of low melting solders which may be used include a lead/bismuth eutectic melting at 124°C and a tin/bismuth eutectic melting at 138°C.

The invention is illustrated but not limited by the following description with reference to the accompanying drawings in which:

Figure 1 is a plan view of an array of heating wires being applied to the surface of a sheet of interlayer material in accordance with the invention;

Figure 2 is a section on the line II-II in Figure 1;

Figure 3 is a section, corresponding to Figure 2, at a later stage in the production process after metal strips have been applied over the wires of the heating array.

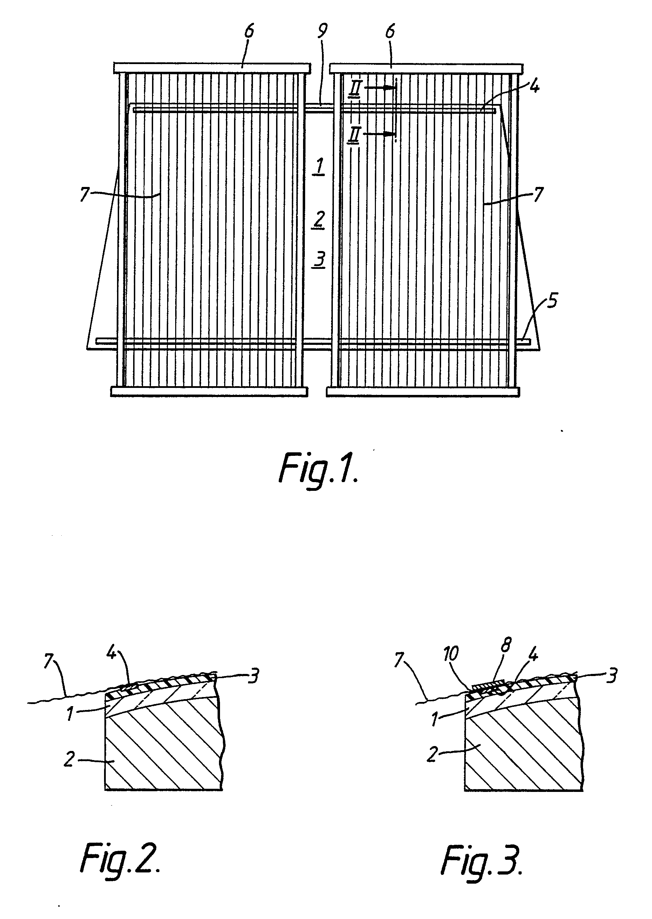

Referring to Figures 1 and 2 of the drawings, a first curved glass pane 1, which is to constitute the inner pane of a laminated vehicle window, is placed on a horizontal jig 2 having an upper surface with a curvature corresponding to that of the glass pane.

A sheet 3 of interlayer material, for example a sheet of polyvinylbutyral of thickness 0.76 mm, is laid over the glass pane so that its curvature conforms to that of the glass.

Narrow metal strips, for example strips 4,5 of copper 2-3 mm wide and about 0.05 mm thick, tinned with a surface layer of tin lead alloy (Sn:Pb::60:40) to protect the copper metal surface from oxidation, are laid over the interlayer material in positions corresponding to opposite edges of the heated area of the laminated window to be produced and a heated iron run over the metal strips to locally melt the interlayer material under the metal strips and adhere the metal strip to it as shown in Figure 2. These metal strips are not essential to the practice of the invention and constitute the "additional" metal strips referred to above.

Two jigs 6, each carrying a pre-formed array 7 of fine, closely-spaced heating wires are then laid over the interlayer material so that wires rest on the interlayer material. In practice, the heated wires used will usually, but not necessarily, be crimped in known manner. Further wider metal strips 8, preferably of copper tinned with a surface layer of tin lead alloy (Sn:Pb::60:40) to protect the copper metal surface from oxidation, are then applied over the metal strips 4 and 5 (see Figure 3) so that they extend beyond the narrower metal strips on both edges thereof. A hot iron is then run over the surface of the wider metal strips to cause them to adhere to the interlayer material and temporarily secure the wires in position on the interlayer material by trapping them between the metal strips and the interlayer. The ends of these wider metal strips preferably extend beyond the edges of the glass for connection of an electrical supply across the array of heating wires, using the metal strips as bus bars. If desired the metal strips along the upper edge 9 of the window as shown in Figure 1 may be extended along the side edges to the bottom edge and extend beyond the side edges adjacent the bottom corners of the window for more convenient connection of an electrical supply when the window is fitted in the vehicle.

A second curved glass pane (not shown), of corresponding size and curvature to the first pane, is then applied over the interlayer, wire array and metal strips constituting the bus bars, and excess interlayer material cut away where it extends beyond the edges of the glass panes. The assembly of panes and interlayer is then de-aired and heated in an autoclave in known manner. During the autoclaving, the interlayer softens and the wire array and overlying metal strips 8 become embedded in the interlayer and hence securely fixed in position.

To improve the electrical connection between the metal strips serving as bus bars and the heating wires, the wider metal strips 8 overlying the heating wires (and/or the narrow metal strips under the heating wires) may be provided with a thin surface layer 10 (Figure 3) of low melting solder. The low melting solder is applied over the higher melting tin lead alloy referred to above on the surfaces of the wider metal strips (and/or the narrow metal strips) facing the heating wires. This solder may be, for example, lead/bismuth eutectic melting at 124°C. Low melting solder present on the metal strips melts on autoclaving the laminate providing a secure, durable electrical contact between the metal strips 8 and the heating wires.

The present invention provides a simple technique, avoiding the use of environmentally objectionable solvents, for the production of wire heated laminated windows without the need for a complex apparatus to embed the heating wires in the interlayer material or the need to prepare a composite plastics/wire filament for use in forming the wire array.

**Claims**

1. A process for the production of a wire-heated laminated window comprises forming an array of fine, closely-spaced heating wires on the surface of a sheet of interlayer material, applying metal strips over the wires in position corresponding to opposite edges of the heated area of the laminated window to be produced, and heating the metal strips to adhere them to the interlayer material and at least temporarily secure the wire array in position on the interlayer material, sandwiching the interlayer material between two outer panes and autoclaving the resulting laminate.

2. A process according to claim 1 wherein additional metal strips are adhered to the interlayer material in positions corresponding to opposite edges of the heated area of the laminated window before the wire array is formed on the surface of the interlayer material.

3. A process according to claim 2 wherein the additional metal strips are narrower than the metal strips applied over the heating wires and the said metal strips applied over the wires are arranged to extend beyond the additional metal strips on both edges thereof for adhesion to the interlayer material on either side of the additional metal strips.

4. A process according to claim 2 or claim 3 wherein either the metal strips and/or the additional metal strips have a surface layer of low melting point solder on their surfaces facing the heating wires such that the solder melts to provide good electrical contact between the metal strips and the heating wires on autoclaving of the laminate.

5. A process for the production of a wire-heated laminated vehicle window comprising providing a pre-assembly comprising a first curved inner glass pane and a layer of interlayer material on the surface thereof, adhering metal strips to the exposed surface of the interlayer material in positions corresponding to opposite edges of the heated area of the laminated window to be produced, providing an array of fine, closely-spaced heating wires on the exposed surface of the interlayer extending between said metal strips and applying further wider metal strips over the heating wires extending beyond said metal strips adhered to the interlayer material on either side thereof and adhering said wider metal strips to the interlayer material by heat to trap the wire array between the interlayer and the wider metal strips, applying a second curved outer glass pane over the wire array and metal strips and autoclaving the resulting sandwich to form a laminated vehicle window.

6. A process according to claim 5 wherein said wider metal strips have a surface layer of low melting point solder on their surfaces facing the heating wires whereby the solder melts to provide good electrical contact between the metal strips and the heating wires on autoclaving of the laminate.

7. A wire-heated laminated window produced by a process according to any of the preceding claims.

Fig.1.

Fig.2.

Fig.3.

| | **DOCUMENTS CONSIDERED TO BE RELEVANT** | | EP 90302210.1 |
|---|---|---|---|

| Category | Citation of document with indication, where appropriate, of relevant passages | Relevant to claim | CLASSIFICATION OF THE APPLICATION (Int. Cl.⁵) |
|---|---|---|---|
| X | US - A - 3 383 762 (LECLERCQ) * Abstract; column 4, lines 21-42; fig. 5 * | 1-7 | C 03 C 27/12 H 05 B 3/26 |
| X | US - A - 3 409 759 (BOICEY et al.) * Column 4, lines 53-73; column 5, lines 17-45; column 6, lines 36-45,64-72; column 7, lines 24-36; fig. 12,13,15,19-22 * | 1-7 | |
| A | DE - B - 2 127 693 (GLAS- UND SPIEGELMANUFAKTUR N.KINON GMBH) * Claim 1; column 4, lines 9-20; fig. 2 * | 1 | |
| D,A | GB - A - 972 453 (TRIPLEX SAFETY GLASS COMPANY LIMITED) * Claims; fig. * | 1 | TECHNICAL FIELDS SEARCHED (Int. Cl.⁵) |
| D,A | GB - A - 2 044 173 (THERGLAS GMBH FÜR FLÄCHEN-HEIZUNG) | | C 03 C H 05 B |

The present search report has been drawn up for all claims

| Place of search | Date of completion of the search | Examiner |
|---|---|---|
| VIENNA | 18-05-1990 | HAUSWIRTH |